# EUROPEAN PATENT SPECIFICATION

(11) **EP 2 599 967 B1**
(45) Date of publication and mention of the grant of the patent: **20.02.2019**
(21) Application number: 12194889.7
(22) Date of filing: 29.11.2012
(51) Int. Cl.: F01D 15/00, F02C 3/10, F02C 7/36, F16D 1/076, F16D 13/72

(54) **Cooling system for gas turbine load coupling**
Kühlsystem für Gasturbinen-Last-Kupplung
Système de refroidissement pour un embrayage couplant une charge à une turbine à gaz

(30) Priority: 02.12.2011 IT FI20110257
(43) Date of publication of application: 05.06.2013
(73) Proprietor: Nuovo Pignone S.p.A., 50127 Florence (IT)
(72) Inventor: Viti, Filippo, 50127 Florence (IT); Marcucci, Daniele, 50127 Florence (IT); Merlo, Roberto, 50127 Florence (IT); Lazzeri, Marco, 50127 Florence (IT)
(74) Representative: Illingworth-Law, William Illingworth

(56) References cited:
- EP-A1- 1 707 752
- EP-A1- 2 256 294
- WO-A1-2009/073838
- GB-A- 2 049 054
- JP-A- 56 162 211
- JP-A- 2000 274 208
- JP-A- 2000 291 446

## Description

### FIELD OF THE INVENTION

The present disclosure relates generally to gas turbines such as in particular, but not exclusively, to aeroderivative gas turbines. More specifically, the disclosure relates to industrial applications of aeroderivative gas turbines, for power generation, natural gas liquefaction or similar industrial applications.

### DESCRIPTION OF THE RELATED ART

Aeroderivative gas turbines are widely used as power sources for mechanical drive applications, as well as in power generation for industrial plants, pipelines, offshore platforms, LNG applications and the like.

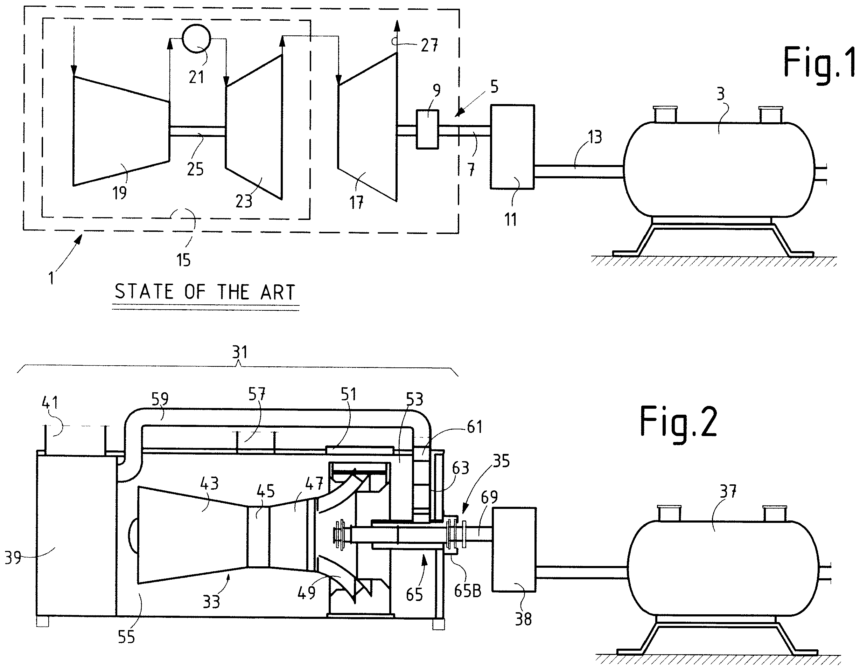

Fig. 1 illustrates a schematic representation of a system including a gas turbine and a load mechanically driven by said gas turbine. More specifically, in the diagrammatic representation of Fig. 1 reference 1 indicates a gas turbine which drives a load, for example a compressor or a compressor train for a natural gas liquefaction line, schematically shown at 3. The gas turbine 1 is connected to the load 3 by means of a load coupling 5. The load coupling 5 comprises a shaft 7 and a joint 9. In the example of Fig. 1 the shaft 7 rotatingly driven by the gas turbine 1 is connected to a gear box 11. An output shaft 13 of said gear box 11 connects the gear box 11 to the load 3. The load 3 can include a single rotary machine, e.g. a compressor, or an electric generator, or else a set of rotary machines on the same shaft. A further gear box can be arranged between two adjacent rotary machines driven by the turbine 1.

The gas turbine 1 comprises a gas generator 15 and a power turbine 17. The gas generator 15 comprises in turn a compressor 19, a combustion chamber 21 and a high pressure turbine 23. The air entering the compressor 19 is compressed at high pressure and added with a liquid or gaseous fuel in the combustion chamber 21. The compressed and high temperature combustion gases are expanded first in the high pressure turbine 23, which is connected through an internal shaft 25 to the compressor 19. The expansion of the combustion gasses in the high pressure turbine 23 generates mechanical power, which drives into rotation the compressor 19. The partly expanded combustion gasses exiting the high pressure turbine 23 enter the power turbine 17 and further expand to generate mechanical power, which drives the load 3 through the load coupling 5. The exhausted combustion gasses are collected by a collector-diffuser and discharged through a discharge line 27.

In the example shown in Fig. 1 the gas turbine is a single shaft gas turbine, i.e. a gas turbine wherein a single internal shaft 25 connects the high pressure turbine 23 to the compressor 19 of the gas generator 15. The power turbine, sometimes also named low pressure turbine, is supported by a shaft that is separate from the internal shaft 25 such that the gas generator 15 can rotate independently of and at a different speed than the power turbine 17. Other gas turbine embodiments provide for a different number of internal shafts and the gas generator can comprise a different number of compressors and turbines driving the compressors.

These turbines are typically aeroderivative turbines.

In the exemplary embodiment of Fig. 1 the load 3 is connected through the load coupling 5 to the so-called hot end of the gas turbine 1, i.e. the gas turbine side where the power turbine 17 is arranged, to be distinguished from the cold end, corresponding to the side of compressor 19.

The load coupling 5 is subject to temperature deformations due to high temperature at the hot end of the gas turbine 1. Thermal deformation of the shaft 7 must be sagged, i.e. measures must be adopted to prevent the thermal expansion of the shaft 7 to damage the load bearings of either the power turbine 17 or the machinery arranged on the load side, i.e. the bearings of the gear box 11 (if present) and/or of the rotary machines 3 driven by the gas turbine 1. Commonly adopted measures include arranging a joint which can compensate for the thermal expansion of the shaft. Thermal expansion of the shaft nevertheless generates axial forces on the bearings on both sides of the joint, i.e. on the turbine bearings and on the gearbox or rotary machine bearings.

JP-2000-291446 discloses a gas turbine with a load-coupling cooling system, including fan blades mounted on the load coupling. The fan blades are driven into rotation by the load coupling and generate a stream of cooling air from the environment through a guard surrounding the load coupling. Using fan blades driven by the load coupling removes the need for an additional compressor or fan for cooling the load coupling. However, the blades modify the rotodynamic behavior of the load coupling and can negatively affect the correct operation thereof, leading to dynamic stresses, vibration and potential failure of the rotating components and relevant supports.
A need therefore exists for a more efficient load-coupling cooling system.

### SUMMARY OF THE INVENTION

As will be described here below, reference being made to some embodiments of the invention, a particularly efficient arrangement is provided for delivering a stream of cooling air in a volume at least partly surrounding at least a portion of the load coupling connecting the gas turbine and the load, heat is actively removed by forced air convection from the load coupling, thus reducing the thermal deformation of the load connection and therefore reducing the axial load on the turbine and load bearings.

According to the invention a gas turbine package as defined in claim 1 and a method of reducing heat and mechanical stress on a load coupling in a gas turbine as defined in claim 12 are provided. The forced air convection provided in the load-coupling guard removes heat from the load coupling and maintains the load coupling at low temperature, thus reducing the overall thermal deformation of the load coupling. In this way axial loads generated by thermal expansion of the load bearing are reduced also when the gas turbine is connected to the load via said load coupling on the hot end of the gas turbine, i.e. on the side of the power turbine rather than on the side of the compressor.

The cooling air channeling is designed and arranged to circulate a cooling air flow taken from the cooling air circulation system in the load-coupling guard. The air flow circulating in the load-coupling guard is sufficient to remove heat from said load coupling and reduce the thermal and mechanical stresses thereof. In some embodiments, the cooling air channeling is designed and configured to divert a fraction of the ambient air delivered by the cooling air circulation system upstream of the turbomachinery compartment, i.e. before the fresh ambient air enters the turbomachinery compartment. The air delivered by the cooling air channeling towards the load-coupling guard is thus nearly at ambient temperature, thus achieving improved cooling of the load coupling.
A single air forcing device can be arranged and designed for forcing cooling air in the turbomachinery compartment and through the cooling air channeling in said load-coupling guard. A simple construction with a limited number of auxiliary facilities is thus required to perform cooling of both the turbomachinery casing and the load coupling. The efficiency of the system is improved, the overall reliability thereof is enhanced. A more compact arrangement is also achieved. A separate air forcing device for delivering cooling air to the load coupling can be dispensed with, since the cooling air flow around the load coupling is generated by the same air forcing device which is provided for turbomachinery cooling. Additionally, no fan blades are required to be mounted on the load coupling, as in the above mentioned prior art arrangements.
In some embodiments an air intake line or duct can be provided and arranged in fluid communication with the cooling air circulation system and with said cooling air channeling. The air intake line can be provided with a filter arrangement at the inlet thereof. The filter arrangement filters both the ambient air required for cooling the turbomachinery casing, as well as the ambient air required for cooling the load coupling. No separate filter arrangement is required. In some embodiments, the air intake line is in fluid communication with an air intake plenum, from which combustion air enters the compressor of the gas generator of the gas turbine. This further improves the efficiency of the system reducing the costs thereof, as a single filter arrangement filters the entire cooling air flow as well as the combustion air flow.

Further embodiments and advantageous features of a gas turbine according to the subject matter disclosed herein are described here below.

In some preferred embodiments, the gas turbine is an aeroderivative gas turbine. The gas turbine can be a single-shaft gas turbine, i.e. a gas turbine wherein the compressor is mechanically driven by a high pressure gas turbine, wherein the compressor and the high pressure gas turbine are supported on a common shaft. The compressor and high pressure gas turbine form a gas generator. The exhaust combustion gases exiting the high pressure turbine are further expanded in the power turbine. The power turbine is supported on an independent shaft and drives into rotation a load. In some embodiments a gear box is arranged between the power turbine and the load.

In other embodiments the gas turbine can be a dual-shaft or a three-shaft gas turbine, comprising two or three compressors and two or three turbines, with co-axial shafts connecting the turbines and shafts to one another.

Irrespective of the number of compressors and turbines, and from the number of co-axial shafts, a load coupling is provided between the power turbine, i.e. the turbine providing power to drive the load, and the load, with possible interposition of a gear box to drive the load and the power turbine at different rotational speeds. The load coupling commonly comprises at least a shaft and one or more joints. The shaft can be comprised of one or more shaft sections or shaft portions, connected to one another.

In some embodiments the load coupling and the load-coupling guard extend through an exhaust gas plenum or exhaust collector-diffuser assembly, which at least partly surrounds said load coupling and said load-coupling guard. The exhaust collector-diffuser assembly develops around the axis of the gas turbine and collects the exhausted and expanded combustion gases to discharge them in the environment or convey the expanded, high temperature combustion gases e.g. towards a steam turbine or another section of a co-generation plant.

The gas turbine is at least partly arranged in a gas turbine package comprised of a turbomachinery compartment housing said gas turbine. An air circulation system is further provided, for circulating cooling air in the turbomachinery compartment. A load compartment is arranged downstream the turbomachinery compartment. The load compartment is arranged on a side of the turbomachinery compartment. An opposite air intake plenum is arranged on the opposite side of the turbomachinery compartment, to allow air in the compressor of the gas turbine and in the turbomachinery compartment, to cool the exterior of the turbomachinery casing. The load coupling which connects the gas turbine and the load preferably extends through the load compartment. The load-coupling guard receives air from the cooling air circulation system.

The cooling air channeling comprises an air port, wherein cooling air from said cooling air circulation system is forcedly circulated. A first ventilation duct fluidly connects said air port to said load-coupling guard and a second and possibly a third ventilation duct is provided, in fluid communication with the load compartment to allow forced air circulation in said load compartment.
The load-coupling guard can be open ended at both ends, such that the air forcedly circulating in the volume delimited by the load-coupling guard can escape at both ends of the load-coupling guard. This enhances cooling of the load coupling also in portions thereof extending outside the load-coupling guard.
According to a further aspect, the subject matter disclosed herein relates to a method of reducing heat and mechanical stresses on a load coupling in a gas turbine as defined in claim 12.

In further embodiments, the method can additionally comprise the step of causing cooling air to escape from the confined volume at at least a first end of said load-coupling guard facing said power turbine, whereby a stream of cooling air exiting said confined volume at said first end of said load-coupling guard is directed against said power turbine. In some embodiments the method can further comprise the step of causing cooling air to escape from said confined volume at at least a second end of said load-coupling guard facing said load, whereby a stream of cooling air exiting said confined volume at said second end of said load-coupling guard is directed away from said power turbine and towards said load. The second end of the load-coupling guard can open toward the environment, i.e. outside the turbine package.

Features and embodiments are disclosed here below and are further set forth in the appended claims, which form an integral part of the present description. The above brief description sets forth features of the various embodiments of the present invention in order that the detailed description that follows may be better understood and in order that the present contributions to the art may be better appreciated. There are, of course, other features of the invention that will be described hereinafter and which will be set forth in the appended claims. In this respect, before explaining several embodiments of the invention in details, it is understood that the various embodiments of the invention are not limited in their application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.
As such, those skilled in the art will appreciate that the conception, upon which the disclosure is based, may readily be utilized as a basis for designing other structures, methods, and/or systems for carrying out the several purposes of the present invention. It is important, therefore, that the claims be regarded as including such equivalent constructions insofar as they do not depart from the scope of the present invention.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig.1 illustrates a gas turbine and compressor arrangement according to the state of the art.
Fig.2 illustrates a gas turbine and compressor arrangement embodying the subject matter disclosed herein;
Fig.3 illustrates a schematic section according to a vertical plane of the arrangement of Fig.2;
Fig.4 illustrates a cross-section according to line IV-IV in Fig.3; and
Fig.5 illustrates further embodiment of a gas turbine and load arrangement according to the present disclosure.

### DETAILED DESCRIPTION OF EMBODIMENTS OF THE INVENTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

Fig. 2 schematically illustrates a system embodying the subject matter disclosed herein. The system comprises a gas turbine and a load connected to the gas turbine by means of a load coupling. More specifically in the diagrammatic representation of Fig. 2, a gas turbine package 31 comprising a gas turbine 33 is connected by means of a load coupling 35 to a load 37. In the exemplary embodiment illustrated in Fig. 2 the load 37 is represented as a compressor, such as a compressor for a refrigerant of a natural gas liquefaction system. In the exemplary embodiment illustrated in Fig.2 a gearbox 38 is arranged between the gas turbine and the compressor 37. The compressor 37 can be one of a series of compressors forming a compressor train driven by the same gas turbine 33. It shall be understood that a different kind of load can be driven by the gas turbine. For example the load can be an electric generator of a power generation plant. The load coupling can include one or more gearboxes and/or one or more rotary machines, such as electric machines or turbomachines.

In the exemplary embodiment shown in Fig. 2, the gas turbine package 31 comprises an air intake plenum 39 in fluid communication with an air intake line 41 and with the inlet side of a compressor 43 of the gas turbine 33. The gas turbine 33 can be comprised of a high pressure turbine 45 and a power turbine 47. The high pressure turbine 45 is drivingly connected to the compressor 43 by an internal shaft (not shown). Combustion gases generated in the combustion chamber of the gas turbine expand sequentially in the high pressure turbine 45 to generate the power required to drive the compressor 43 and subsequently in the power turbine 47, to drive the load 37. Different gas turbine arrangements can be used, for example including two or more compressor in sequence and more than two turbines in series on the hot side of the gas turbine 33. In general terms, the gas turbine 33 comprises a gas generator comprised of at least one compressor 43 and a high pressure turbine 45, said gas generator providing combustion gases at high temperature and high pressure, which are expanded in one or more turbines 47.

In some embodiments the gas turbine 33 can be an aeroderivative gas turbine. The overall structure and layout, including the number of compressors, the number of turbines, the number of shafts, the number of compression and expansion stages of the aeroderivative gas turbine can vary from one aeroderivative gas turbine to the other. Suitable aeroderivative gas turbines are LM2500+G4 LSPT or LM2500 aeroderivative gas turbines, both commercially available from GE Aviation, Evendale, Ohio, USA. Other suitable aeroderivative gas turbines are the PGT25+G4 aeroderivative gas turbine commercially available from GE Oil and Gas, Florence, Italy, or the Dresser-Rand Vectra® 40G4 aeroderivative gas turbine commercially available from Dresser-Rand Company, Houston, Texas, USA, for example. In other embodiments, the aeroderivative gas turbine can be a PGT16, a PGT 20, all commercially available from GE Oil and Gas, Florence, Italy or an LM6000 aeroderivative gas turbine, commercially available from GE Aviation, Evendale, Ohio, USA.

The expanded and exhausted combustion gases are collected in an exhaust diffuser-collector assembly 49 and discharged towards the environment through a discharge line 51.

In the exemplary embodiment shown in the drawings, the exhaust diffuser-collector assembly 49 is arranged in a load compartment 53. The load compartment 53 is arranged at the opposite side of the gas turbine package 31 with respect to the intake plenum 39, i.e. at the hot end side of the gas turbine. The load coupling 35 extends from the power turbine 47 through the exhaust diffuser-collector assembly 49 which therefore at least partly surrounds the load coupling 35.

Part of the air sucked through the air intake plenum 39 at the cold end side of the gas turbine 33 flows through the gas turbine package 31 and more specifically through a turbomachinery compartment 55 forming the intermediate portion of the gas turbine package 31 and housing at least partly the gas turbine 33. The air circulating in the turbomachinery compartment 55 cools the casing of the turbine machinery and is exhausted through an exhaust cooling air line 57.
In some embodiments, part of the cooling air sucked in the turbomachinery compartment 55 is deviated in an air duct 59 which is in fluid communication with an air port 61.

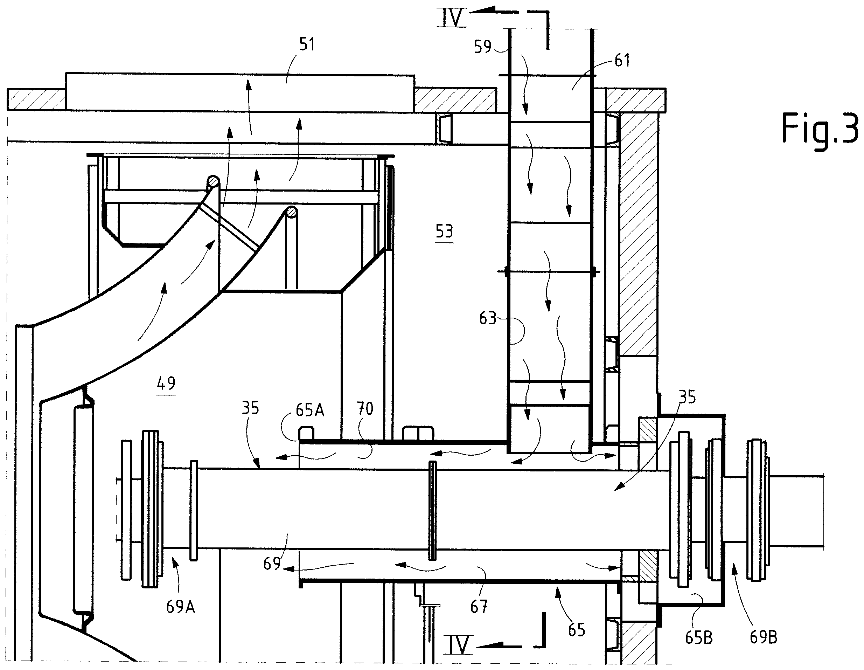

An air ventilation duct 63 fluidly connects the air port 61 with a load-coupling guard 65, the structure of which can best be seen in Fig. 3. In some embodiments the load-coupling guard 65 is comprised of a cylindrical shell or sleeve 67 surrounding at least partly a shaft 69 forming part of the load coupling 35.
In some embodiments the load-coupling guard 65 comprises a first end 65A facing towards the gas turbine 33 and a second end 65B facing the load 37. At least one end and preferably both ends 65A and 65B can be open such that cooling air which is forcedly circulated through the air port 61 and the ventilation duct 63 escapes from a confined volume or space delimited by the cylindrical shell or sleeve 67 of the load-coupling guard 65, said volume being indicated with reference number 70. In some embodiments the first end 65A of the load-coupling guard is oriented such that air escaping the first end 65A is forced against the exhaust diffuser-collector assembly 49. In some embodiments the second end 65B of the load-coupling guard 65 can be open towards the environment, outside the turbine package, such that a part of the cooling air forcedly circulating in the confined volume surrounding the load coupling is vented in the environment.

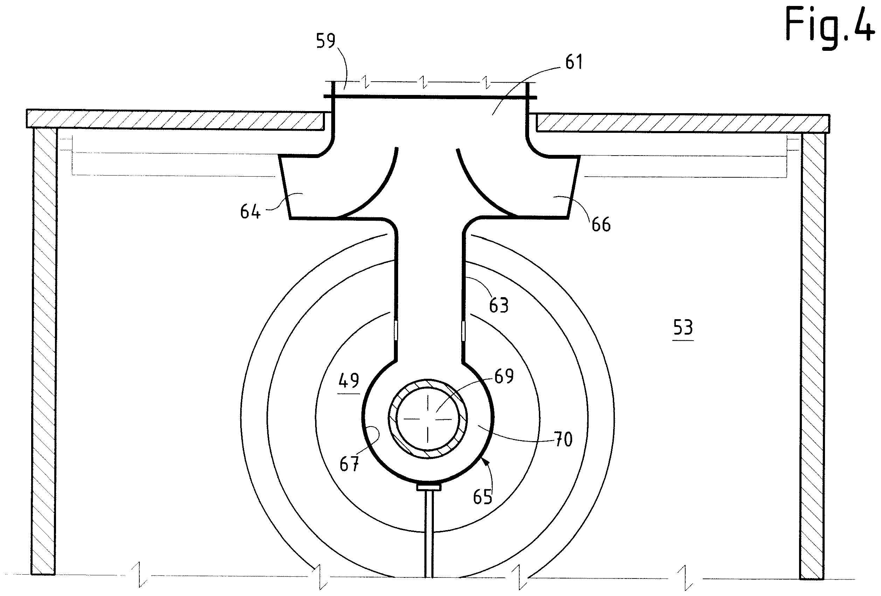

The air port 61 is additionally in fluid communication with a second ventilation duct 64 and possibly with a third ventilation duct 66 (see Fig. 4).
The second and third ventilation ducts 64 and 66 comprise open ends arranged in the load compartment 53, such that air forced into the ventilation ducts 64, 66 is vented in the load compartment 53. The air circulating in the load compartment cools the load compartment 53 and any apparatus arranged therein.
With the above described arrangement, cooling air forced by the cooling air circulating system through the air duct 59 is caused to enter the first ventilation duct 63 as well as the second and/or third ventilation ducts 64 and 66. The air stream conveyed by the first ventilation duct 63 into the volume 70 surrounding the load coupling 35 cools the load coupling 35 and more specifically the shaft 69 surrounded by the load-coupling guard 65. An air flow escaping from both ends 65A and 65B of the load-coupling guard 65 is forced to remove heat also from both portions of the shaft 69 extending from the load-coupling guard 65 and of one or more joints arranged on said shaft 69 outside of the load-coupling guard 65. Additionally, the air escaping from the open end 65A of the load-coupling guard 65 is oriented towards the exhaust diffuser-collector assembly 49, maintaining the temperature in the area surrounding the load coupling 35 at a reduced temperature.
The temperature of the cooling air and the rate of the cooling air flow are advantageously such as to maintain the temperature of the load coupling 35 and more specifically of the shaft 69 at such a value to reduce substantially the axial load on the bearings of the shaft both on the turbine side as well as on the load side.
As can be appreciated in particular from Fig. 3 in some embodiments the open end 65A of the load-coupling guard 65 is arranged within the hollow part of the exhaust diffuser-collector assembly 49 through which the load coupling 35 extends. In this manner an efficient cooling air stream exiting the tubular load-coupling guard 65 is directed along the proximal end of the shaft 69, and possibly a joint 69A arranged between the shaft 69 and the hot end of the gas turbine 33 just in that area where the highest heat load is present, said heat load being caused by the hot exhausted gasses collected by the exhaust diffuser-collector assembly 49 and deviated towards the discharge line 51.

Fig. 3 schematically illustrates a further joint 69B arranged on the load coupling 35 in the area of the second open end 65B of the load-coupling guard 65. Also in this area, the forced cooling air stream escaping the open end 65B provides for an efficient cooling of this area of the load coupling 35.

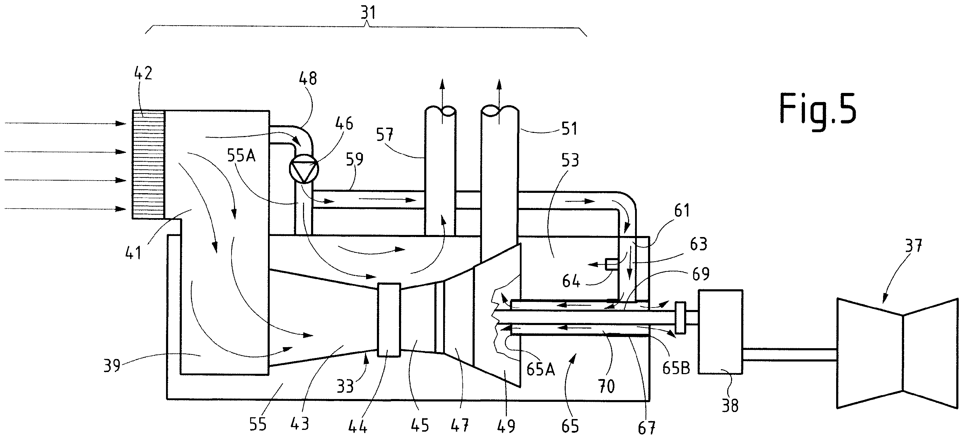

Fig.5 schematically illustrates a further embodiment of the gas turbine and load arrangement according to the present disclosure. The same reference numbers are used to designate the same or similar parts, components or elements described here above in connection with Fig.2.

The system comprises a gas turbine package 31 comprising a gas turbine 33 is connected by means of a load coupling 35 to a load 37. In the exemplary embodiment illustrated in Fig. 5 the load 37 comprises again a compressor, e.g. a compressor for a refrigerant of a natural gas liquefaction system. A gearbox 38 can be arranged between the gas turbine and the compressor 37. In other embodiment a direct drive between the gas turbine and the load can be provided or a different speed manipulation device can be used instead of a gearbox. The compressor 37 can be one of a series of compressors forming a compressor train driven by the same gas turbine 33. It shall be understood that a different kind of load can be driven by the gas turbine. For example the load can be an electric generator of a power generation plant. The load coupling can include one or more gearboxes and/or one or more rotary machines, such as electric machines or turbomachines.

The gas turbine package 31 comprises an air intake plenum 39 in fluid communication with an air intake line or duct 41 and with the inlet side of a compressor 43 of the gas turbine 33. A filter arrangement 42 usually provided at the inlet of the air intake line or duct 41 is also shown in Fig.5.

The gas turbine 33 can be comprised of a high pressure turbine 45 and a power turbine 47. The high pressure turbine 45 is drivingly connected to the compressor 43 by an internal shaft (not shown). Combustion gases generated in a combustion chamber 44 of the gas turbine expand sequentially in the high pressure turbine 45 to generate the power required to drive the compressor 43 and subsequently in the power turbine 47, to drive the load 37. Different gas turbine arrangements can be used, for example including two or more compressor in sequence and more than two turbines in series on the hot side of the gas turbine 33. In general terms, the gas turbine 33 comprises a gas generator comprised of at least one air compressor 43 and a high pressure turbine 45, said gas generator providing combustion gases at high temperature and high pressure, which are expanded in one or more power turbines 47. The power turbine(s) can be mechanically connected to the shaft of the high pressure turbine and compressor. In alternative embodiments, the power turbine 47 can be mechanically separate from the gas generator, i.e. the gas generator shaft and the power turbine shaft can be mechanically independent from one another.

The expanded and exhausted combustion gases are collected by an exhaust diffuser-collector assembly 49 and discharged towards the environment through a discharge line or stack 51.

The exhaust diffuser-collector assembly 49 can be arranged in a load compartment 53, which is arranged opposite the intake plenum 39, i.e. at the hot end side of the gas turbine 33. The load coupling 35 extends from the power turbine 47 through the exhaust diffuser-collector assembly 49 which therefore at least partly surrounds the load coupling 35.

Combustion air is sucked through the filter arrangement 42 and the air intake line or duct 41 in the intake plenum 39 by the compressor 33.

Through the same air intake line or duct 41 and the filter arrangement 42 fresh ambient air is also delivered towards the interior of the gas turbine package 31, and more specifically through the turbomachinery compartment 55 for cooling purposes. Fresh ambient air is further delivered from the air intake line or duct 41 towards a load-coupling cooling arrangement, as will be described in greater detail here below.

In some embodiments, a single fan, compressor, or any other air forcing or air propelling device, schematically shown at 46, is provided in a ventilation air duct 48, which is in fluid communication with the air inlet line 41. An air forcing or air propelling device shall be understood as any device suitable to deliver a sufficient air flowrate at a sufficient air pressure for the purposes described here below. Air sucked by the fan 46 from the air inlet line 41 is forced or propelled through a duct 55A to a turbomachinery compartment 55 forming the intermediate portion of the gas turbine package 31 and at least partly housing the gas turbine 33. The air circulating in the turbomachinery compartment 55 cools the casing of the turbine machinery and is exhausted through an exhaust cooling air line 57.
In some embodiments, part of the cooling air sucked in the turbomachinery compartment 55 is deviated in an air duct 59 which is in fluid communication with an air port 61. In the exemplary embodiment shown in Fig.5, an air ventilation duct 63 fluidly connects the air port 61 with a load-coupling guard 65, which can have the same structure disclosed here above in connection with Figs 2 to 4. In some embodiments the load-coupling guard 65 is comprised of a cylindrical shell or sleeve 67 at least partly surrounding a shaft 69 forming part of the load coupling 35.
Also in the embodiment of Fig.5 the guard 65 comprises a first end 65A facing towards the gas turbine 33 and a second end 65B facing the load 37. At least one end and preferably both ends 65A and 65B can be open, so that cooling air circulating through the air port 61 and the ventilation duct 63 escapes from a confined volume or space 70 delimited by the cylindrical shell or sleeve 67 of the load-coupling guard 65. In some embodiments the first end 65A of the load-coupling guard is oriented so that air escaping the first end 65A is forced against the exhaust diffuser-collector assembly 49. In some embodiments the second end 65B of the load-coupling guard 65 can be open towards the environment, outside the turbine package, so that a part of the cooling air forcedly circulating in the confined volume surrounding the load coupling is vented in the environment.

The air port 61 is additionally in fluid communication with a second ventilation duct 64 and possibly additional ventilation ducts, not shown. The ventilation duct(s) 64 opens in the load compartment 53, so that air forced into the ventilation duct 64 is vented in the load compartment 53. The air circulating in the load compartment cools the load compartment 53, the surface of exhaust collector-diffuser assembly 49 and any apparatus arranged in the load compartment 53.
In the embodiments of both Figs 2-4 and Fig.5 a single air source is therefore provided, for delivering cooling air through the gas turbine package and the turbomachinery compartment 55 in particular, as well as to the load-coupling guard surrounding the load coupling. A single fan, compressor or ventilator can be provided for forcedly circulating cooling air both around the turbomachine casing in the turbomachinery compartment 55 as well as around the load coupling. Preferably the air is taken from the air inlet line or duct 41.

In preferred embodiments, a single filter arrangement 42 is provided for filtering both the combustion air ingested by the compressor 43 of the gas turbine 33, as well as the cooling air circulating in the gas turbine package, and specifically in the turbomachinery compartment 55 for cooling the turbomachine casing, as well as around the load coupling.

A compact arrangement having reduced manufacturing and maintenance costs is obtained.

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the novel teachings, the principles and concepts set forth herein, and advantages of the subject matter recited in the appended claims. Hence, the proper scope of the disclosed innovations should be determined only by the broadest interpretation of the appended claims so as to encompass all such modifications, changes, and omissions. In addition, the order or sequence of any process or method steps may be varied or re-sequenced according to alternative embodiments.

## Claims

1. A gas turbine package (31) comprising a turbomachinery compartment (55) housing a gas turbine (33), the gas turbine comprising a compressor (43) and a power turbine (47); the package further comprising a load (37) and a load coupling (35) connecting said gas turbine (33) to the load (37); a load-coupling guard (65) at least partly surrounding said load coupling (35); a cooling air circulation system for circulating cooling air in said turbomachinery compartment (55); a cooling air channeling (59, 61, 63) designed and arranged to circulate a cooling air flow from said cooling air circulation system in said load-coupling guard (65) sufficient to remove heat from said load coupling (35), **characterized in that**:
said load coupling extends through a load compartment (53) arranged downstream of said turbomachinery compartment (55); **in that** said
cooling air channeling comprises an air port (61), through which cooling air from said cooling air circulation system is forcedly circulated; and **in that** at least a first ventilation duct (63) fluidly connects said air port (61) to said load-coupling guard (65) and a second ventilation duct (64; 66) feeds cooling air from said air port (61) in said load compartment (53).

2. A gas turbine package according to claim 1, comprising an air forcing device (46) arranged and designed for forcing cooling air in said turbomachinery compartment (55) and through said cooling air channeling in said load-coupling guard.

3. A gas turbine package according to claim 1 or 2, comprising an air intake line (41) in fluid communication with said cooling air circulation system and with said cooling air channeling.

4. A gas turbine package according to claim 3, wherein said air intake line (41) is in fluid communication with an air intake plenum (39), from which combustion air enters said compressor (43).

5. A gas turbine package according to claim 3 or 4, further comprising a filter arrangement (42) arranged and configured for filtering ambient air entering said air intake line (41).

6. A gas turbine package according to any one of the preceding claims, wherein said gas turbine is an aeroderivative gas turbine.

7. A gas turbine package according to any one of the preceding claims, wherein said load coupling (35) is connected to a hot end of said gas turbine.

8. A gas turbine package according to any preceding claim, wherein said load coupling (35) and said load-coupling guard (65) extend through an exhaust collector-diffuser assembly (49), which at least partly surrounds said load coupling and said load-coupling guard (65).

9. A gas turbine package according to any preceding claim, wherein said turbine package (31) comprises an air intake plenum (39), said turbomachinery compartment (55) being arranged between said air intake plenum (39) and said load compartment (53).

10. A gas turbine package according to any preceding claim, comprising a third ventilation duct (66; 64) feeding cooling air in said load compartment (53).

11. A system comprising a gas turbine package (31) according to any one of the preceding claims, and a load (37) driven by said gas turbine, wherein said load (37) is connected to said gas turbine by said load coupling (35).

12. A method of reducing heat and mechanical stresses on a load coupling (35) in a gas turbine (33), said method comprising: providing a gas turbine package (31) as defined in one of claims 1-11; generating a cooling air stream to cool a casing of the gas turbine (33); diverting a fraction of said cooling air stream upstream of the turbomachinery compartment (55) and forcing said fraction of cooling air stream around said load coupling for removing heat from said load coupling (35).

## Patentansprüche

1. Gasturbinenpaket (31), umfassend eine Turbomaschinenkammer (55), die eine Gasturbine (33) aufnimmt, wobei die Gasturbine einen Kompressor (43) und eine Leistungsturbine (47) umfasst; wobei das Paket weiter eine Last (37) und eine Lastkopplung (35) umfasst, die die Gasturbine (33) mit der Last (37) verbindet; einen Lastkopplungsschutz (65), der mindestens teilweise die Lastkopplung (35) umgibt; ein Kühlluftzirkulationssystem zum Zirkulieren von Kühlluft in der Turbomaschinenkammer (55); eine Kühlluftkanalisierung (59, 61, 63), die ausgelegt und angeordnet ist, um eine Kühlluftströmung vom Kühlluftzirkulationssystem im Lastkopplungsschutz (65) ausreichend zu zirkulieren, um Hitze von der Lastkopplung (35) abzuleiten, **dadurch gekennzeichnet, dass**:
die Lastkopplung sich durch eine Lastkammer (53) erstreckt, die stromabwärtig von der Turbomaschinenkammer (55) angeordnet ist; dadurch, dass
die Kühlluftkanalisierung eine Luftöffnung (61) umfasst, durch die Kühlluft vom Kühlluftzirkulationssystem zwangszirkuliert wird; und dadurch, dass mindestens ein erster Lüftungskanal (63) die Luftöffnung (61) fluidisch mit dem Lastkopplungsschutz (65) verbindet und ein zweiter Lüftungskanal (64; 66) Kühlluft von der Luftöffnung (61) in die Lastkammer (53) zuführt.

2. Gasturbinenpaket nach Anspruch 1, umfassend eine Lufterzwingungsvorrichtung (46), die angeordnet und ausgelegt ist, um Kühlluft in die Turbomaschinenkammer (55) und durch die Kühlluftkanalisierung im Lastkopplungsschutz zu erzwingen.

3. Gasturbinenpaket nach Anspruch 1 oder 2, umfassend eine Lufteinlassleitung (41) in Fluidkommunikation mit dem Kühlluftzirkulationssystem und mit der Kühlluftkanalisierung.

4. Gasturbinenpaket nach Anspruch 3, wobei die Lufteinlassleitung (41) in Fluidkommunikation mit einer Lufteinlasssammelraum (39) ist, von dem Verbrennungsluft in den Kompressor (43) eintritt.

5. Gasturbinenpaket nach Anspruch 3 oder 4, weiter umfassend eine Filteranordnung (42), die angeordnet und konfiguriert ist, um Umgebungsluft, die in die Lufteinlassleitung (41) eintritt, zu filtern.

6. Gasturbinenpaket nach einem der vorstehenden Ansprüche, wobei die Gasturbine eine von einem Flugtriebwerk abgeleitete Gasturbine ist.

7. Gasturbinenpaket nach einem der vorstehenden Ansprüche, wobei die Lastkopplung (35) mit einem heißen Ende der Gasturbine verbunden ist.

8. Gasturbinenpaket nach einem der vorstehenden Ansprüche, wobei die Lastkopplung (35) und der Lastkopplungsschutz (65) sich durch eine Abgas-Kollektordiffusor-Anordnung (49) erstreckt, die mindestens teilweise die Lastkopplung und den Lastkopplungsschutz (65) umgibt.

9. Gasturbinenpaket nach einem der vorstehenden Ansprüche, wobei das Gasturbinenpaket (31) einen Lufteinlasssammelraum (39) umfasst, wobei die Turbomaschinenkammer (55) zwischen dem Lufteinlasssammelraum (39) und der Lastkammer (53) angeordnet ist.

10. Gasturbinenpaket nach einem der vorstehenden Ansprüche, umfassend einen dritten Lüftungskanal (66; 64), der Kühlluft in die Lastkammer (53) zuführt.

11. Verfahren, umfassend ein Gasturbinenpaket (31) nach einem der vorstehenden Ansprüche und eine von der Gasturbine angetriebene Last (37), wobei die Last (37) mit der Gasturbine durch die Lastkopplung (35) verbunden ist.

12. Verfahren zum Reduzieren von Hitze und mechanischer Belastung auf eine Lastkopplung (35) in einer Gasturbine (33), wobei das Verfahren umfasst: Bereitstellen eines Gasturbinenpakets (31) nach einem der Ansprüche 1-11; Erzeugen einer Kühlluftströmung, um ein Gehäuse der Gasturbine (33) zu kühlen; Ablenken eines Teils der Kühlluftströmung stromaufwärts der Turbomaschinenkammer (55) und Erzwingen des Teils der Kühlluftströmung um die Lastkopplung, um Hitze von der Lastkopplung (35) abzuleiten.

## Revendications

1. Carter de turbine à gaz (31) comprenant un compartiment de turbomachinerie (55) logeant une turbine à gaz (33), la turbine à gaz comprenant un compresseur (43) et une turbine de puissance (47) ; le carter comprenant en outre une charge (37) et un couplage de charge (35) raccordant ladite turbine à gaz (33) à la charge (37) ; une protection de couplage de charge (65) entourant au moins partiellement ledit couplage de charge (35) ; un système de circulation d'air de refroidissement pour la circulation d'air de refroidissement dans ledit compartiment de turbomachinerie (55) ; une canalisation d'air de refroidissement (59, 61, 63) conçue et agencée pour faire circuler un flux d'air de refroidissement dudit système de circulation d'air de refroidissement dans ladite protection de couplage de charge (65) suffisamment pour prélever de la chaleur dudit couplage de charge (35), **caractérisé en ce que** :
ledit couplage de charge s'étend au travers d'un compartiment de charge (53) agencé en aval dudit compartiment de turbomachinerie (55) ; **en ce que** ladite canalisation d'air de refroidissement comprend un orifice d'air (61), au travers duquel de l'air de refroidissement dudit système de circulation d'air de refroidissement circule à force ; et **en ce qu'**au moins un premier conduit de ventilation (63) raccorde fluidiquement ledit orifice d'air (61) à ladite protection de couplage de charge (65) et un second conduit de ventilation (64; 66) alimente en air de refroidissement dudit orifice d'air (61) ledit compartiment de charge (53).

2. Carter de turbine à gaz selon la revendication 1, comprenant un dispositif de circulation forcée d'air (46) agencé et conçu pour faire passer de force de l'air de refroidissement dans ledit compartiment de turbomachinerie (55) et au travers de ladite canalisation d'air de refroidissement dans ladite protection de couplage de charge.

3. Carter de turbine à gaz selon la revendication 1 ou 2, comprenant une ligne d'admission d'air (41) en communication fluidique avec ledit système de circulation d'air de refroidissement et avec ladite canalisation d'air de refroidissement.

4. Carter de turbine à gaz selon la revendication 3, dans lequel ladite ligne d'admission d'air (41) est en communication fluidique avec un plénum d'admission d'air (39), duquel de l'air de combustion entre dans ledit compresseur (43).

5. Carter de turbine à gaz selon la revendication 3 ou 4, comprenant en outre un agencement de filtre (42) agencé et configuré pour filtrer de l'air ambiant entrant dans ladite ligne d'admission d'air (41).

6. Carter de turbine à gaz selon l'une quelconque des revendications précédentes, dans lequel ladite turbine à gaz est une turbine à gaz aérodérivative.

7. Carter de turbine à gaz selon l'une quelconque des revendications précédentes, dans lequel ledit couplage de charge (35) est raccordé à une extrémité chaude de ladite turbine à gaz.

8. Carter de turbine à gaz selon l'une quelconque des revendications précédentes, dans lequel ledit couplage de charge (35) et ladite protection de couplage de charge (65) s'étendent au travers d'un ensemble de diffuseur-collecteur d'échappement (49) qui entoure au moins partiellement ledit couplage de charge et ladite protection de couplage de charge (65).

9. Carter de turbine à gaz selon l'une quelconque des revendications précédentes, dans lequel ledit carter de turbine (31) comprend un plénum d'admission d'air (39), ledit compartiment de turbomachinerie (55) étant agencé entre ledit plénum d'admission d'air (39) et ledit compartiment de charge (53).

10. Carter de turbine à gaz selon l'une quelconque des revendications précédentes, comprenant un troisième conduit de ventilation (66; 64) alimentant en air de refroidissement ledit compartiment de charge (53).

11. Système comprenant un carter de turbine à gaz (31) selon l'une quelconque des revendications précédentes, et une charge (37) entraînée par ladite turbine à gaz, dans lequel ladite charge (37) est raccordée à ladite turbine à gaz par ledit couplage de charge (35).

12. Procédé de réduction de contraintes thermiques et mécaniques sur un couplage de charge (35) dans une turbine à gaz (33),
ledit procédé comprenant : la fourniture d'un carter de turbine à gaz (31) selon l'une des revendications 1 à 11; la génération d'un courant d'air de refroidissement pour refroidir un carter de la turbine à gaz (33) ; la déviation d'une fraction dudit courant d'air de refroidissement en amont du compartiment de turbomachinerie (55) et la circulation de force de ladite fraction du courant d'air de refroidissement autour dudit couplage de charge pour le prélèvement de la chaleur dudit couplage de charge (35).
